# EUROPEAN PATENT SPECIFICATION

(11) **EP 0 780 445 B1**
(45) Date of publication and mention of the grant of the patent: **15.03.2000**
(21) Application number: 96308760.6
(22) Date of filing: 04.12.1996
(51) Int. Cl.: C09B 67/06, C09B 67/20

(54) **Process for the production of granular pigment and coloring composition**
Verfahren zur Herstellung eines Pigmentgranulats sowie Färbemittel
Procédé pour la fabrication d'un pigment granulaire et composition colorante

(30) Priority: 22.12.1995 JP 35046695
(43) Date of publication of application: 25.06.1997
(73) Proprietor: TOYO INK MANUFACTURING CO., LTD., Tokyo (JP); Cosmos Colorants Co., Ltd., Taipei-City (TW)
(72) Inventor: Sun, Ru-Shiong, South Road, Taipei City (TW); Chang, Ting-Wei, Hsi-Chih Country, Taipei-Prefecture (TW); Kawasaki, Shinji, c/o Toyo Ink Manuf.Co.,Ltd., Tokyo (JP)
(74) Representative: Woods, Geoffrey Corlett

(56) References cited:
- GB-A- 2 140 022
- PATENT ABSTRACTS OF JAPAN vol. 12, no. 5 (C-467) [2852] , 8 January 1988 & JP 62 161861 A (SUMITOMO CHEM. CO. LTD.), 17 July 1987, & JP 57 053 568 A

## Description

The present invention relates to a process for the production of a granular pigment excellent in handling properties such as easy dispersing and dustlessness, and a coloring composition containing the granular pigment.

Conventionally, an organic pigment or an inorganic pigment is formed as a dry powder, and then prepared into a colorant for use it in various fields. A pigment wet cake containing a large amount of water is directly used as a colorant in some fields. The pigment wet cake generally has a water content of 50 to 90 % by weight. When a dry powder is prepared from the pigment wet cake, however, it is generally treated at a temperature between 80°C and 150°C until the water content is decreased to 1 % by weight or less. In this treatment, therefore, pigment particles cause aggregation, which involves a change in hue, a decrease in transparency, tinting strength and gloss and poor dispersion. It is therefore difficult to maintain the product quality which is achieved when the pigment wet cake is used as it is. Further, the preparation of a pigment in the form of dry powder has some other problems. It requires a long period of time and much energy to remove almost all water content in a drying step, it requires a pulverizing step to adjust a dry powder to an easily dispersible form, and a dust of the pigment aggravates a working environment.

Generally, a suspension of an azo pigment in water, formed in a reaction vessel, contains very fine pigment particles (called "primary particles"). When the wet cake is dried, however, the pigment undergoes aggregation and cannot retain the fine particle state of the formed pigment, and the particles aggregate to form large-diametered massive particles called secondary particles. When the secondary particles are pulverized, it is practically impossible to pulverize them into fine particles having a diameter of the initially formed crystal particles. Even if a long period of time, much energy and much labor are taken, practically, it is impossible to form a fine dispersion of the particles having the form of primary particles in a resin or a varnish.

On the other hand, a pigment wet cake is free from aggregation because no drying is necessary, and it is therefore free of the defects of the above dry powder and gives a product having a good quality. Since, however, a pigment wet cake generally has a high water content, as high as 90 to 50 % by weight, it is difficult to handle or transport. Further, when it is used in an aqueous dispersion such as a water-based coating composition, a water-based ink or an aqueous dispersion for textile printing, it is difficult to obtain a dispersion having a high pigment concentration. Moreover, since the primary particles are extremely fine in particle size, resin components are adsorbed to the pigment particles thereby to increase the viscosity of the dispersion. As a result, the dispersion such as an ink or a coating composition does not easily flow out of a dispersing apparatus. And, the ink or the coating composition is poor in the stability of storage viscosity. When a printing ink is prepared, it is required to carry out a so-called flushing in which water is separated while mixing the pigment wet cake and a varnish for an ink with a kneading machine such as a flusher, and in this case, much energy and time are required for separating water from the pigment wet cake having a high water content. Further, a large amount of the separated water needs waste water treatment, which requires large expenses and expensive facilities.

JP-A-57-53568 discloses a method of overcoming the above defects of a powder or a wet cake, in which a wet cake is molded in a uniformly easily drying form, e.g., with an extruder, and the extrudate is dried at 80 to 100°C to obtain a particulate or rod-like pigment having a water content of 20 to 55 %. The above method is troublesome since it is required to dry the extrudate after extrusion molding. Further, there are some other points which require improvements, that is, it is difficult to obtain a pigment having a uniform water content by drying since it has a particulate or rod-like form. When a pigment is formed by compressing a wet cake on a grooved drum, the wet cake is pressed to give only a hard molded pigment.

Further, JP-A-59-191765 discloses a pigment composition containing water and a pigment of which the water content is decreased to 2 to 19 % by drying a pigment wet cake with hot air while retaining the pigment form and non-aggregate state of the pigment wet cake, and a process for preparing a coloring resin composition containing the pigment composition. In the above process, a pigment dispersion excellent in easy dispersing can be obtained by a relatively simple step. In the above hot air drying method, the pigment is dried in a fine particle state while constantly pulverizing it at a high rate for maintaining the uniform drying condition in the system. However, when the above method is microscopically viewed, the application of heat differs between the particle surface and the particle interior, and when the water content is decreased to as low as 2 to 19 % by weight, aggregation takes place partially on the particle surface, and the color development is insufficient in some cases. In recent years, there is an advanced method of improvement in decreasing the primary particles of a pigment in size for increasing the pigment concentration. When the above hot air drying method is applied to such a pigment, partial aggregations are highly liable to take place.

In the present invention, the term "water content" means an amount ratio of water in a pigment composition containing the water, and refers to a value obtained by dividing a weight loss after drying a pigment composition containing water at 80 to 110°C by the weight of the composition which is not so dried, and expressing the quotient by percentage.

It is an object of the present invention to provide an industrially advantageous process for the production of a granular aqueous pigment excellent in handling properties such as easy dispersing and dustlessness, and a coloring composition containing the granular pigment obtained by the above process.

According to the present invention, there is therefore provided a process for the production of a granular pigment having a water content of 30 to 50 % by weight, which process comprises dehydrating an organic pigment wet cake at 20 to 80°C, by means of a stirrer-equipped vacuum dryer, while pulverizing the cake.

According to the present invention, further, there is provided a coloring composition formed by dispersing the above granular pigment in a water-based resin vehicle.

The aqueous granular pigment of the present invention is excellent in transparency, fluidity, tinting strength, gloss, dispersibility and stability of storage viscosity.

The pigment used in the present invention includes azo pigments, phthalocyanine pigments, quinacridone pigments, indigo pigments, quinophthalone pigments, dioxazine pigments, anthraquinone pigments, isoindoline pigments. Typically, the organic pigment is a phthalocyanine pigment or a quinacridone pigment. Generally, with a decrease in the primary particle diameter of an organic pigment, the cohesive force increases, and the organic pigment aggregates to form larger secondary particles at a drying step. When a pigment having a larger secondary particle diameter is used as a colorant, the pigment quality is deteriorated with regard to tinting strength, dispersibility and color clearness. The process for the production of pigment, provided by the present invention, can be effectively applied to azo pigments having a particularly small primary particle diameter among the above pigments, and it can be also effectively applied to phthalocyanine pigments and quinacridone pigments of which the primary particles are treated with sulfuric acid, or the like. The fine particles of a pigment are obtained, for example, by an acid pasting method in which the pigment is dissolved in sulfuric acid whose amount is 10 to 50 times (by weight) the weight of the pigment and which has a concentration of 90 to 100 %, at 30°C or lower, and water whose amount is 50 to 500 times (by weight) the weight of the pigment is poured into the solution, or the solution is mixed with the water, while the water is maintained at a temperature of 40°C or lower, to re-precipitate the pigment, or an acid slurry method in which sulfuric acid having a concentration of 50 to 89 % and the pigment are allowed to react at a temperature of 30°C or lower, and then the reaction mixture is poured into water as described above, to re-precipitate the pigment.

When the fine particles of a pigment are obtained by the above acid pasting method or the above acid slurry method, the pigment is obtained in the form of an aqueous slurry. Typically, the organic pigment wet cake is obtained by filtering an aqueous slurry of the organic pigment through a filter press, preferably under a high-compression press which permits high compression. Typically, the organic pigment wet cake has a water content of 50 to 90 % by weight. When there is employed a high-speed mixing method using an aspirator as a method of pouring a solution of the pigment in sulfuric acid into water, the pigment is further decreased in size. When an aqueous slurry obtained by this method is filtered under a high-compression press, the resultant wet cake has a water content of 60 to 90 % by weight.

The process of drying the pigment wet cake includes a constant-rate drying period and a reduced-rate drying period. It is known that aggregation by drying takes place in the reduced-rate drying period in particular. The boundary between these two periods differs depending upon the size of the primary particles of a pigment. However, when the water content is 75 % by weight or less, it may be considered that the dehydration takes place in the constant-rate drying period alone. When a pigment wet cake is dried in an oven dryer, an uneven surface is formed on the pigment wet cake, and the water content differs between the projected surface portion and the interior of the wet cake, so that the projected surface portion which is easily dried is liable to undergo partial aggregation. For this reason, the system uniformity is increased by drying the wet cake while pulverizing it, so that the aggregation can be prevented.

The dehydration with a stirrer-equipped vacuum dryer makes it easier to prevent the aggregation. Further, since a granular pigment is formed while dehydrating the wet cake with a stirrer-equipped vacuum dryer, the dehydration with a stirrer-equipped vacuum dryer is more economical than methods in which the molding and the drying (dehydration) are carried out separately.

The stirrer-equipped vacuum dryer refers to a dryer which permits the pressure reduction to 1.3 to 13 kPa (10 to 100 mmHg), can stir a pigment wet cake at 1 to 100 rpm and permits the internal temperature adjustment under external heat, and the stirrer-equipped vacuum dryer includes a paddle dryer, a monoaxial disc dryer and a vacuum tumble dryer.

The pigment wet cake is dehydrated by concurrently applying the stirring and pulverizing activity and the pressure reduction and heating operations to the pigment wet cake with the above stirrer-equipped vacuum dryer. The heating method generally includes a method of heating the outer portion of the dryer through a jacket, while other heating means may be used. The heating temperature is adjusted such that the temperature of the pigment wet cake itself, i.e., a product temperature (to be referred to as "material temperature" hereinafter) becomes 20 to 80°C. When the material temperature exceeds 80°C, a pigment is liable to form aggregates although the liability to aggregation differs to some extent depending upon the kind of the pigment. When the material temperature is too low, the production efficiency decreases. Therefore the heating condition is selected such that the material temperature becomes 20 to 80°C, preferably 20 to 60°C. Typically, the granular pigment has an average particle diameter of 1 to 20 mmφ. When the pigment wet cake is dehydrated to a water content of 50 % by weight or less, the pigment wet cake forms particles having an average particle diameter of 1 to 20 mmφ under shear forces between the stirring blade and the wall of the stirrer-equipped vacuum dryer and between pieces of the cakes.

On the other hand, with an advance in the pressure reduction degree of the stirrer-equipped vacuum dryer, the dehydration rate increases, and the operation is completed in a short period of time. When the pressure reduction degree is low, the dehydration takes a longer period of time. The pressure reduction degree can be selected depending upon the heating temperature, while a high reduction degree is preferred when azo pigments having low heat resistance are used.

The dehydration method will be explained more in detail below. A pigment wet cake having a water content of at least 65 % is typically fed into the above stirrer-equipped vacuum dryer, and the pigment wet cake is heated through a jacket while constantly stirring the pigment wet cake to dehydrate it under reduced pressure until a granular pigment having a water content of 30 to 50 % by weight is formed. In this case, the pigment wet cake is dehydrated to a desired water content of 30 to 50 % by weight, preferably 35 to 45 % by weight, while maintaining the material temperature at a low temperature of 20 to 80°C, more preferably 20 to 60°C, by controlling the jacket temperature and the pressure reduction degree. When the material temperature exceeds 80°C, or when the water content is decreased to less than 30 % by weight, generally, the pigment is liable to form aggregates, which formation causes a change in hue, a decrease in transparency, tinting strength and gloss and poor dispersion, although the liability to aggregate formation differs depending upon the kind of the pigment. It is considered that the aggregation of the pigment can be prevented by the prevention of the local drying of the pigment wet cake, which local drying can be prevented by dehydrating the pigment wet cake in a state where water is uniformly retained by maintaining the low material temperature and at the same time by constantly mixing and stirring the pigment wet cake.

In the present invention, the water content is 30 to 50 % by weight, preferably 35 to 45 % by weight. When the water content is too low, the pigment is liable to form aggregates as described above.

The present invention also provides a process for the production of an offset ink or gravure ink, which process comprises preparing a granular pigment by a process according to the invention and flushing the thus obtained granular pigment with an oily vehicle. However, the granular pigment of the present invention is particularly preferably used in a water-based dispersion (coloring composition) which can be formed without removing water contained in the granular pigment. Thus, the present invention also provides a process for the production of a water-based pigment dispersion, which process comprises preparing a granular pigment by a process according to the invention and dispersing the thus-obtained pigment in a water-based resin vehicle. The water-based dispersion (coloring composition) typically contains 1 to 20 % by weight, as a net pigment content, of the granular pigment, 0 to 30 % by weight of an auxiliary agent such as a surfactant or a dispersing agent, and 50 to 99 % by weight of a water-based resin, the auxiliary agent being added before, during or after the dehydration step. The resin of the water-based resin vehicle includes acrylate polymer-containing, styrene-acrylate copolymer-containing, styrene-maleate copolymer-containing, alkyd-containing, epoxy-containing, polyester-containing or urethane-containing water-dispersible or water-soluble resins. Particularly preferred are acrylate copolymer-containing water-dispersible or water-soluble resins.

In the present invention, a solvent and additives such as various resin and surfactants which are generally used may be added before, during or after the pigment synthesis or the dehydration step.

The granular pigment produced according to the process of the present invention has the following advantages.
(1) Differing from a pigment wet cake, the granular pigment has a high pigment content and can give a coloring composition having a high pigment concentration as required.
(2) When a pigment wet cake is dispersed in a varnish, it is required to pre-disperse the pigment wet cake with a high-speed mixer or a dissolver for crushing the hard pigment wet cake, while the granular pigment according to the present invention can be easily dispersed in a water-based resin vehicle for a short period of time without pre-dispersing it.
(3) The granular pigment produced according to the present invention can be handled, transported and color-adjusted by mixing as a powder is handled, transported and color-adjusted.
(4) Since the granular pigment according to the present invention is in the form of an aqueous sand-like particles, and it therefore causes no dust when handled. It is therefore a so-called "dustless" pigment which does not aggravate a working environment.
(5) When a powder is used for producing a printing ink in particular, high roll constriction is required, and the number of rolls on which the powder is passed is increased, for removing the aggregation caused by drying, and in this case, the powder is seized on the rolls. Therefore, much labor, much time and much energy are required. Further, an obtained ink is inferior to an ink obtained from a pigment wet cake in hue, transparency, gloss and tinting strength.
   On the other hand, the pigment wet cake is extremely disadvantageous in handling and transportation as compared with a powder. When flushed, it requires much labor, much time and much energy for separating water, and waste water treatment is also required. The granular pigment according to the present invention can overcome the above defects of the powder and pigment wet cake, and gives a printing ink of which the quality is equivalent to, or excellent over, that of an ink obtained from the pigment wet cake.
(6) Further, the granular pigment according to the present invention has a lower water content than a pigment wet cake and it can be efficiently dispersed not only in a water-based resin vehicle but also a polar-solvent type oil-based vehicle such as an alcohol which may contain a small amount of water in the field of use other than a printing ink. Further, the granular pigment can give high-quality water-based coloring dispersion. Moreover, the granular pigment can also give a nonpolar solvent type oil-based dispersion (coloring composition) which may contain a small amount of water or from which water is removed when the dispersion is formed.

As explained above, the present invention provides an industrially advantageous process for the production of a high-quality granular pigment.

The present invention will be explained more in detail with reference to Examples hereinafter, while the present invention shall not be limited to these Examples. In Examples, "part" stands for "part by weight".

### Example 1

100 Parts of crude copper phthalocyanine (purity 95 %) was dissolved in 2,000 parts of 98 % sulfuric acid, and the mixture (solution) was stirred at room temperature for 4 hours. Then, the mixture was rapidly mixed with water with an aspirator to precipitate fine particles of copper phthalocyanine (C. I. Pigment Blue 15). At the time of the above mixing, the amount of water and the amount of the solution of copper phthalocyanine in sulfuric acid were adjusted such that the resultant mixture had a temperature of 25°C. The resultant mixture was filtered under a high-compression press, and the fine particles were washed with water to give 250 parts of a pigment wet cake having a water content of 62 % by weight. The pigment wet cake was dried under heat at a jacket temperature of 55°C under a reduced pressure of 40 to 27 kPa (300 to 200 mmHg) while it was stirred with a paddler at a stirrer rotation of 40 rpm, to give a granular pigment A of the present invention having a water content of 40 % by weight.

The granular pigment A was measured with a Ruzex 500 (RTM) image analyzer (supplied by Nippon Regulator) to show an average particle diameter of 2.5 mmφ.

### Comparative Example 1

A pigment wet cake having a water content of 62 % was obtained by treating copper phthalocyanine blue with sulfuric acid in the same manner as in Example 1, and used as a comparative pigment B. Part of the above pigment wet cake was dried in an oven dryer at 80°C until it showed a water content of 42 % by weight. No granules were formed from the so-dried pigment wet cake since it clogged a hammer mill type crusher. On the other hand, a granular pigment was prepared from part of the above wet cake with an extruder although the workability thereof with the extruder was poor, and the granular pigment was used as a comparative pigment C. Part of the comparative pigment B was dried by allowing it to stand in an oven dryer at 80°C, and then a powdered pigment having a water content of 0.4 % by weight was prepared therefrom by crushing it with a hammer crusher and used as a comparative pigment D.

### • Test of water-based flexographic inks

A water-soluble styrene-acrylate copolymer resin varnish and a pigment were dispersed with a sand mill until no coarse particles were found, to prepare a primary color ink having a pigment content of 15 % by weight. In this case, the ink was sampled at constant intervals and measured for coarse particles with a grind-o-meter to evaluate the dispersibility of the ink. The ink was spread on a manila cardboard paper sheet, and the spread ink was measured for a gloss at an incidence angle of 60° with a gloss meter (supplied by Suga Testing Machinery) to evaluate the gloss of the ink. The spread ink was color-measured with a calor machine (supplied by Suga Testing Machinery) to evaluate the clearness and the density of the ink. The ink was spread on a hiding-test paper sheet to compare transparency. The primary color ink and the white ink were mixed such that the weight ratio of the blue pigment of the primary color ink to the white pigment was 1/10, and the resultant ink was spread and visually evaluated for a tinting strength. Further, the workability of a pigment was evaluated based on the scattering state of dust. Concerning the tinting strength, an ink was prepared by adjusting the amount of a pigment sample such that the ink was equivalent to a standard product in color, and then, the amount of the pigment sample and the amount of a pigment in the standard product were compared. The smaller the sample amount is, the higher the sample quality is (with regard to the tinting strength). "Initial viscosity" in Table 1 (and Tables thereafter) refers to the viscosity of an ink which is dispersed in a sand mill until no coarse particles are found, and then taken out of the sand mill. The "coarse particles" refers to particles having a size greater than 10 µm.

As shown in Table 1, the water-based flexographic ink obtained from the pigment A of the present invention was excellent in all the tests except for the tinting strength test in which it was a little inferior to the wet cake. In Tables hereinafter, the evaluation results are shown on the basis of three ratings; A: Excellent, B: Good, and X: poor.

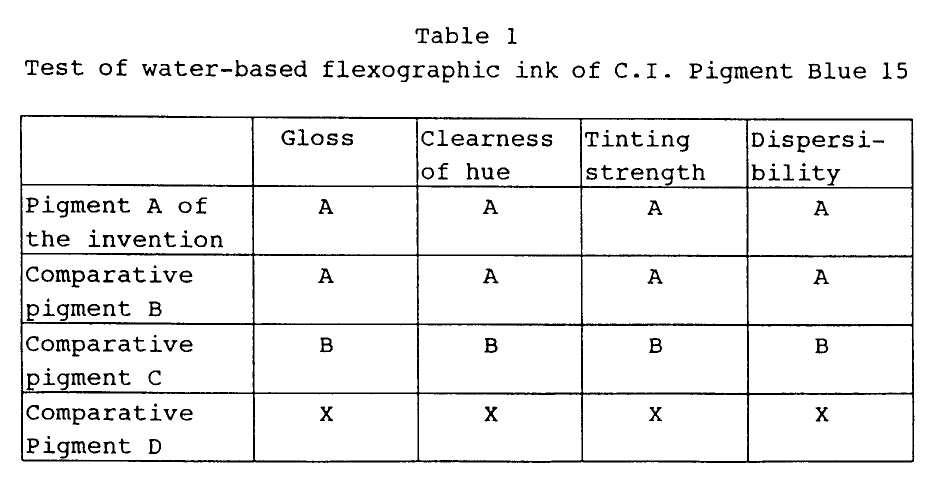

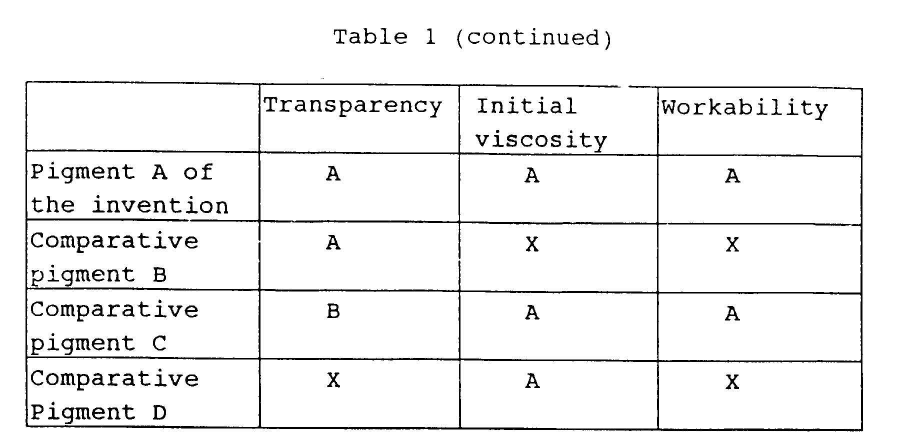

### • Test of water-soluble baking acrylic coating compositions

An acrylic resin for a baking coating composition and a pigment were dispersed until no coarse particles were found, to prepare a primary color base enamel having a pigment content of 20 % by weight. The ink was sampled and evaluated for dispersibility in the same manner as in the test of the water-based flexographic ink. A water-soluble melamine resin, water and a solvent were added to the base enamel and fully mixed to obtain a primary color enamel having a pigment content of 5 % by weight. The primary color enamel was adjusted to a spraying viscosity and applied to a tin plate, and the resultant coating was baked and evaluated for gloss and sharpness of hue. The primary color enamel was measured for a viscosity with a Brookfield viscometer. Further, the primary color enamel was further subjected to an acceleration test with time at 40°C for 1 week and then similarly measured for a viscosity with a Brookfield viscometer. The viscosity found before the acceleration test with time and the viscosity found after it were compared to evaluate the primary color enamel for viscosity stability with the passage of time.

The primary color enamel and a white enamel were mixed such that the weight ratio of the blue pigment of the primary color ink to the white pigment was 1/10, and the resultant enamel was spread and visually evaluated for a tinting strength.

As shown in Table 2, the water-soluble acrylic baking coating composition obtained from the pigment A of the present invention was excellent in all the test results.

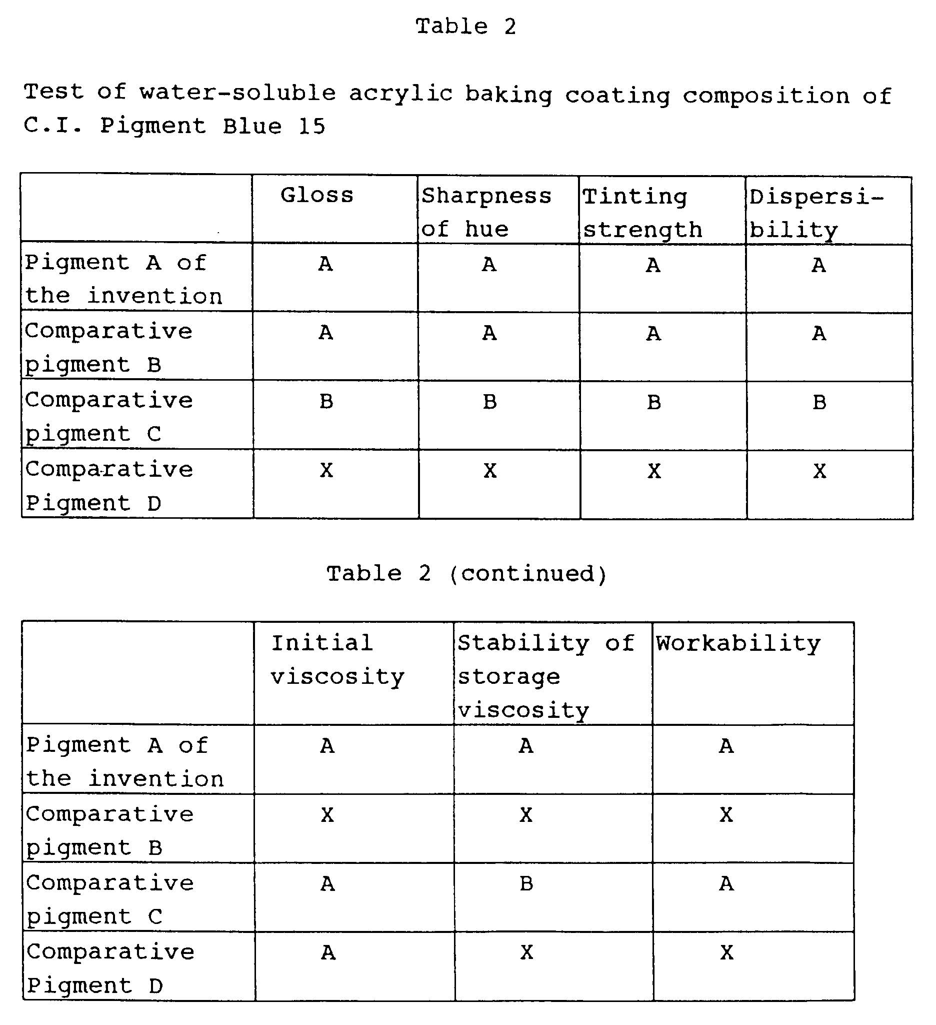

### • A textile printing test

A nonionic surfactant (polyoxyethylene allyl ether), a pigment and an additive were mixed with a high-speed mixer, and the mixture was dispersed with a sand milling type grinder until no coarse particles were found, to prepare a base ink having a pigment content of 20 % by weight. The base ink and a binder (polymer formed from acrylic acid ester as a monomer) were mixed with a reducer formed of an O/W type emulsion to obtain a full shade ink having a pigment content of 2 % by weight and a tinting shade ink having a pigment content of 0.2 % by weight. Each ink was used for printing on cotton, heat-treated and visually evaluated for tinting strength. As shown in Table 3, the textile printing ink obtained from the pigment A of the present invention was excellent in all the test results except for the tinting strength test in which it was a little inferior to the wet cake.

**Table 3**

| Pigment printing test of C.I. Pigment Blue 15 | | | | |
|---|---|---|---|---|
| | Sharpness of hue | Tinting strength | Dispersibility | Workability |
| Pigment A of the invention | A | B | A | A |
| Comparative pigment B | A | A | A | X |
| Comparative pigment C | B | B | B | A |
| Comparative Pigment D | X | X | X | X |

### Example 2

280 Parts of a chlorinated copper phthalocyanine (C.I. Pigment Green 7) wet cake having a water content of 65 % by weight was obtained in the same manner as in Example 1 except that the crude copper phthalocyanine was replaced with crude chlorinated copper phthalocyanine (purity 98 %) and that the 98 % sulfuric acid was replaced with 100 % sulfuric acid. The wet cake was treated under the same conditions as those in Example 1, to give a pigment E of the present invention having a water content of 41 % by weight. The pigment E had an average particle diameter of 3.1 mmφ.

### Comparative Example 2

A pigment wet cake having a water content of 65 % by weight was obtained by treating crude chlorinated copper phthalocyanine with sulfuric acid in the same manner as in Example 2, and used as a comparative pigment F. Part of the above pigment wet cake was dried in an oven dryer at 80°C until it showed a water content of 37 % by weight. No granules were formed from the so-dried pigment wet cake since it clogged a hammer crusher. On the other hand, a granular pigment was prepared from part of the above wet cake with an extruder although the workability thereof with the extruder was poor, and the granular pigment was used as a comparative pigment G. Part of the comparative pigment F was dried by allowing it to stand at 80°C in an oven dryer, and then a powdered pigment having a water content of 0.5 % by weight was prepared therefrom by crushing it with a hammer-mill type crusher and used as a comparative pigment H.

The pigment E of the present invention and the comparative pigments F, G and H were tested according to the methods described in Example 1. Tables 4 to 6 show the results. The coloring dispersion containing the pigment E of the present invention was excellent in all the tests.

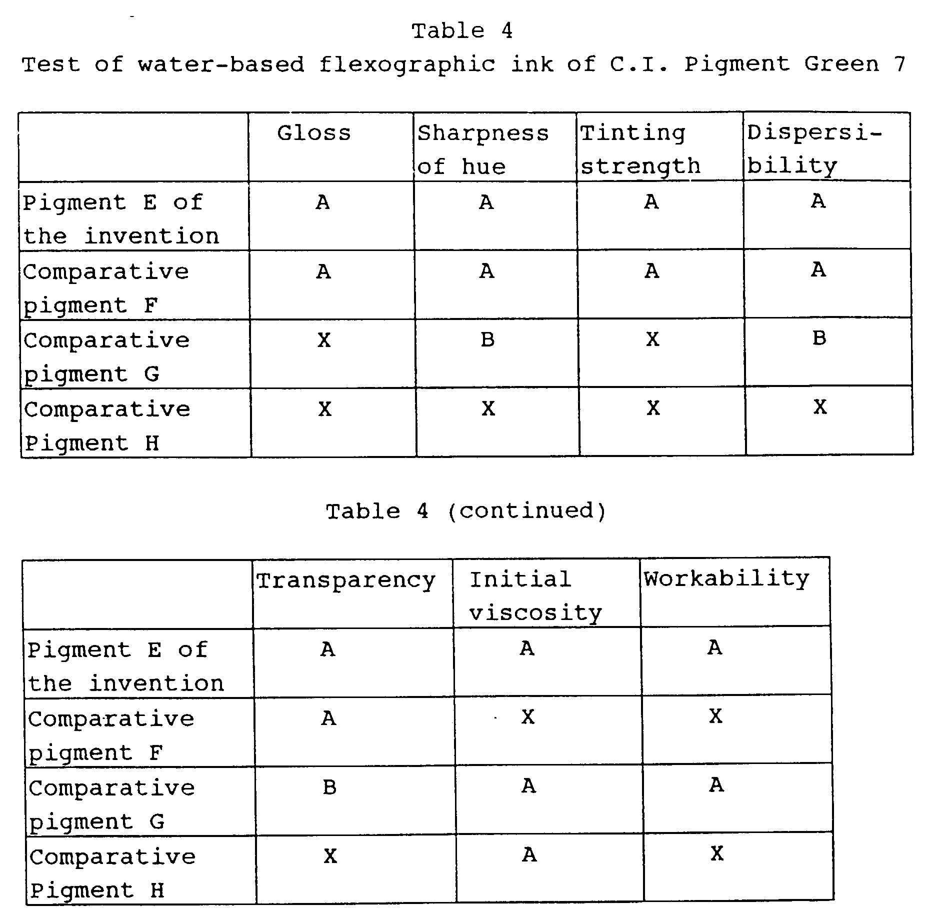

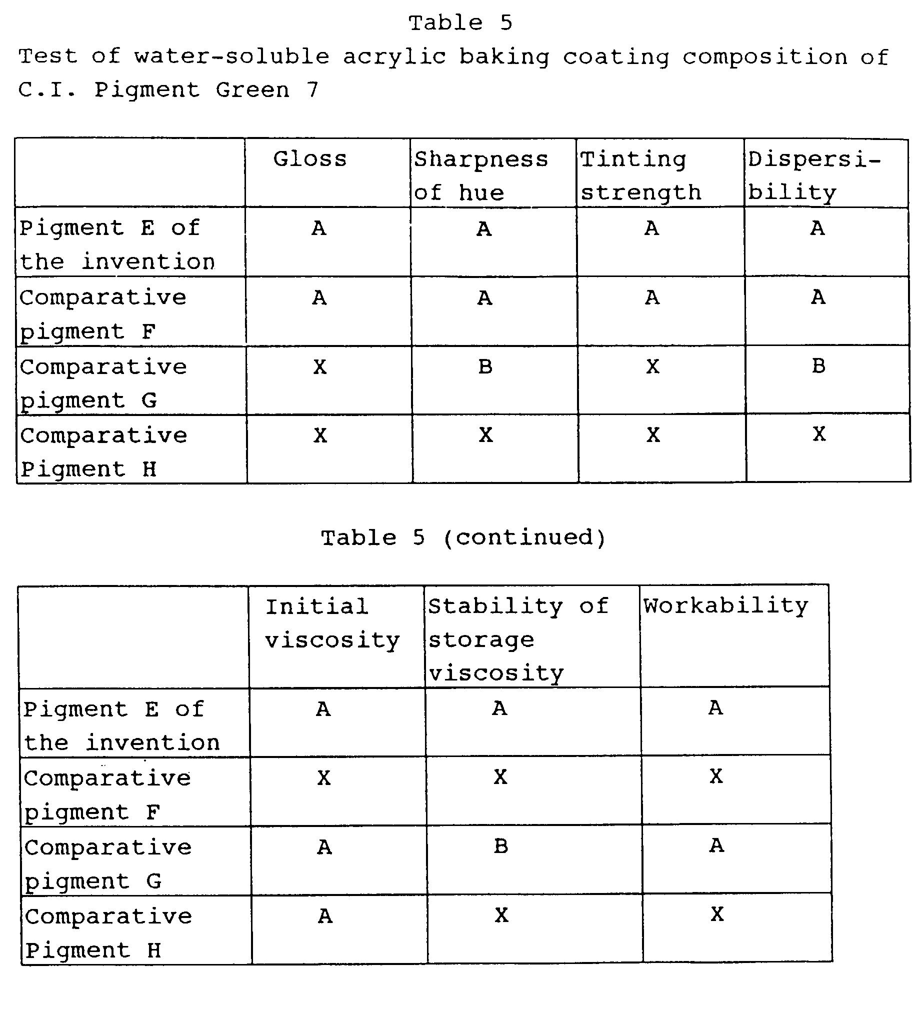

**Table 6**

| Pigment printing test of C.I. Pigment Green 7 | | | | |
|---|---|---|---|---|
| | Sharpness of hue | Tinting strength | Dispersibility | Workability |
| Pigment E of the invention | A | A | A | A |
| Comparative pigment F | A | A | A | X |
| Comparative pigment G | B | X | B | A |
| Comparative Pigment H | X | X | X | X |

### Example 3

285 Parts of a dimethylquinacridone (C.I. Pigment Red 122) wet cake having a water content of 66 % by weight was obtained in the same manner as in Example 1 except that the crude copper phthalocyanine was replaced with crude dimethylquinacridone (purity 97 %) and that the 98 % sulfuric acid was replaced with 89 % sulfuric acid. The wet cake was treated under the same conditions as those in Example 1, to give a pigment I of the present invention having a water content of 39 % by weight. The pigment I had an average particle diameter of 1.9 mmφ.

### Comparative Example 3

A pigment wet cake having a water content of 66 % was obtained by treating crude dimethylquinacridone with sulfuric acid in the same manner as in Example 3, and used as a comparative pigment J. Part of the above pigment wet cake was dried in an oven dryer at 80°C until it showed a water content of 41 % by weight. No granules were formed from the so-dried pigment wet cake since it clogged a hammer crusher. On the other hand, a granular pigment was prepared from part of the above wet cake with an extruder although the workability thereof with the extruder was poor, and the granular pigment was used as a comparative pigment K. Part of the comparative pigment J was dried by allowing it to stand in an oven dryer at 80°C, and then a powdered pigment having a water content of 0.5 % by weight was prepared therefrom by crushing it with a hammer-mill type crusher and used as a comparative pigment L.

The pigment I of the present invention and the comparative pigments J, K and L were tested according to the methods described in Example 1. Tables 7 to 9 show the results. The coloring dispersion containing the pigment I of the present invention was excellent in all the tests.

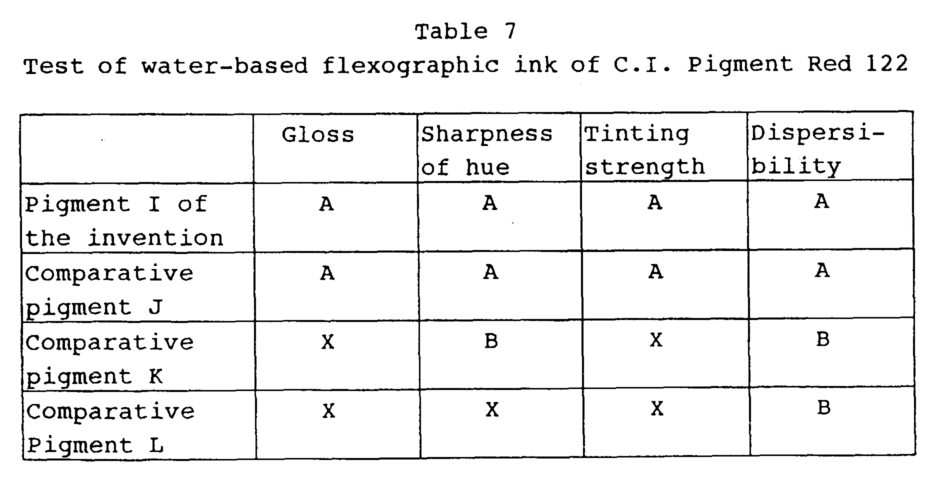

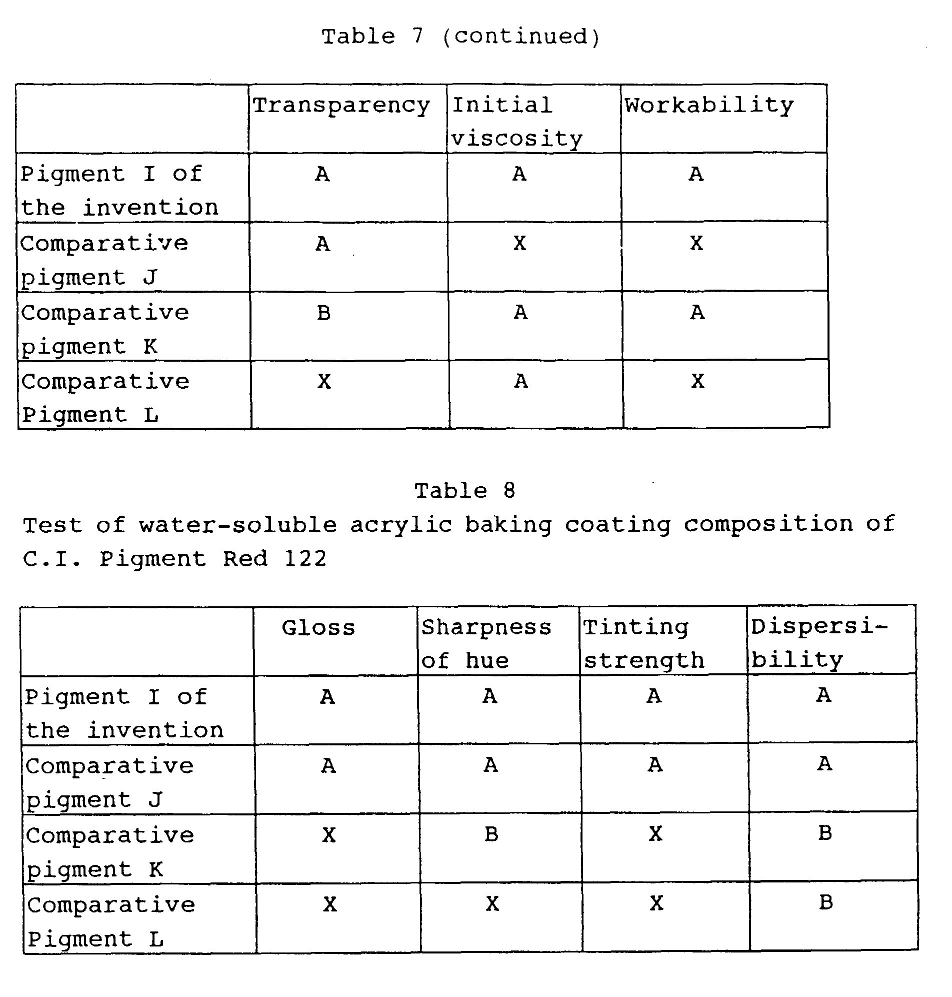

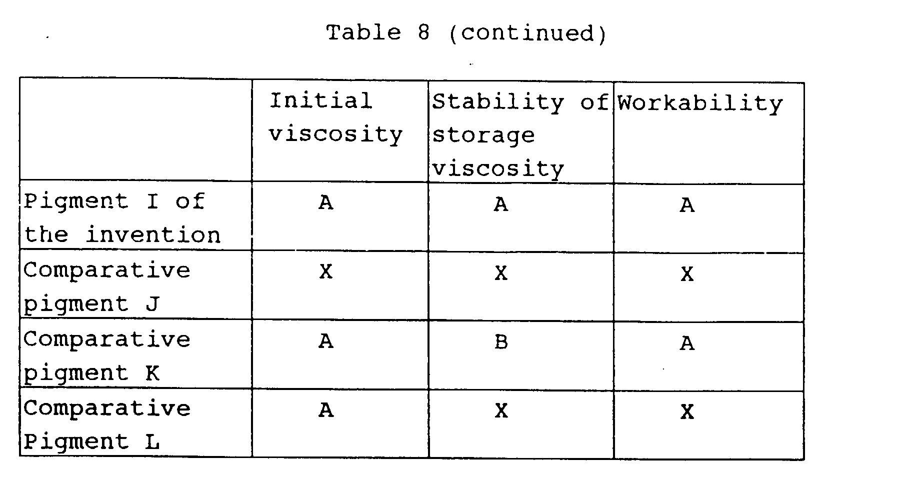

**Table 9**

| Pigment printing test of C.I. Pigment Red 122 | | | | |
|---|---|---|---|---|
| | Sharpness of hue | Tinting strength | Dispersibility | Workability |
| Pigment I of the invention | A | A | A | A |
| Comparative pigment J | A | A | A | X |
| Comparative pigment K | B | X | B | A |
| Comparative Pigment L | X | X | B | X |

### Example 4

42 Parts of N,N-diethyl-4-methoxymethanylamide was diazotized according to a conventional method to prepare a diazo component. The diazo component was coupling-reacted with 58.5 parts of 5'-chloro-3-hydroxy-2',4'-dimethoxy-2-naphthoanilide as a coupling component, to obtain C.I. Pigment Red 5. Then, the C.I. Pigment Red 5 was filtered with a compression press, and washed with water to give 333 parts of a wet cake having a water content of 70 % by weight. The wet cake was treated under the same conditions as those in Example 1 except that a monoaxial disc dryer was used in place, to give a pigment M of the present invention having a water content of 38 % by weight. The pigment M had an average particle diameter of 3,6 mmφ.

### Comparative Example 4

The same pigment wet cake having a water content of 70 % by weight as that obtained in Example 4 was used as a comparative pigment N. Part of the above pigment wet cake was dried in an oven dryer at 80°C until it showed a water content of 40 % by weight. No granules were formed from the so-dried pigment wet cake since it clogged a hammer crusher. On the other hand, a granular pigment was prepared from part of the above wet cake with an extruder although the workability thereof with the extruder was poor, and the granular pigment was used as a comparative pigment O. Part of the comparative pigment N was dried by allowing it to stand in an oven dryer at 80°C, and then a powdered pigment having a water content of 0.5 % by weight was prepared therefrom by crushing it with a hammer-mill type crusher and used as a comparative pigment P.

The pigment M of the present invention and the comparative pigments N, O and P were tested according to the method described in "Test of water-soluble baking acrylic coating compositions" in Example 1. Table 10 shows the results. The coloring dispersion containing the pigment M of the present invention showed excellent test results.

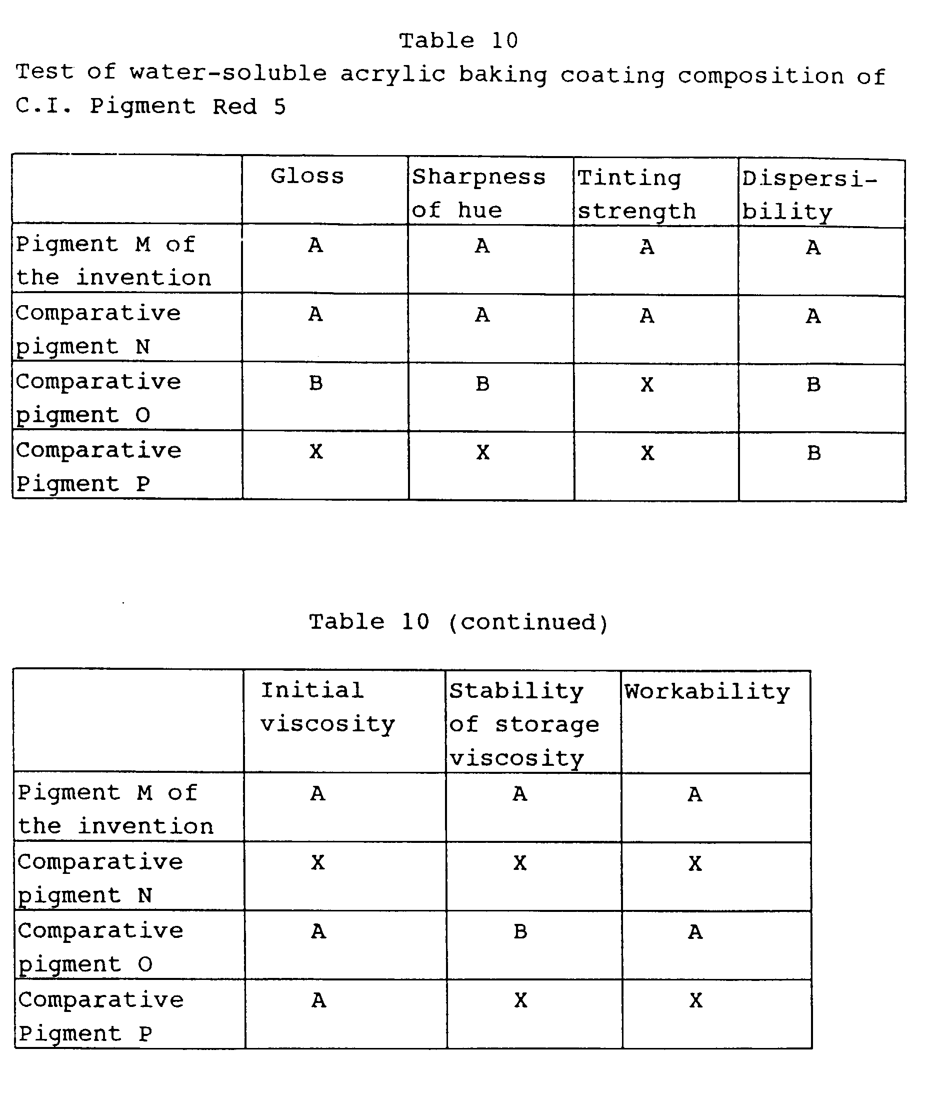

## Claims

1. A process for the production of a granular pigment having a water content of 30 to 50% by weight, which process comprises dehydrating an organic pigment wet cake at 20 to 80°C, by means of a stirrer-equipped vacuum dryer, while pulverizing the cake.

2. A process according to claim 1, wherein the granular pigment has an average particle diameter of 1 to 20 mmφ.

3. A process according to claim 1 or 2, wherein the organic pigment is a phthalocyanine pigment or a quinacridone pigment.

4. A process according to any one of the preceding claims, wherein the cake has a water content of 50 to 90% by weight.

5. A process according to any one of the preceding claims, wherein the cake is obtained by filtering an aqueous slurry of the organic pigment through a filter press.

6. A process for the production of an offset ink or gravure ink, which process comprises preparing a granular pigment by a process according to any one of the preceding claims and flushing the thus-obtained granular pigment with an oily vehicle.

7. A process for the production of a water-based pigment dispersion, which process comprises preparing a granular pigment by a process according to any one of claims 1 to 5 and dispersing the thus-obtained pigment in a water-based resin vehicle.

8. A process according to claim 7, wherein the resulting dispersion contains 1 to 20% by weight, as a net pigment content, of the granular pigment, 0 to 30% by weight of a surfactant or a dispersing agent and 50 to 99% by weight of a water-based resin, the surfactant or dispersing agent being added before, during or after the dehydration step.

9. A coloring composition formed by dispersing the granular pigment set out in claim 1 in a water-based resin vehicle.

## Patentansprüche

1. Verfahren zur Herstellung eines Pigmentgranulats mit einem Wassergehalt von 30 bis 50 Gewichtsprozent, welches Verfahren das Dehydratisieren eines feuchten Filterkuchens eines organischen Pigments bei 20 bis 80°C mittels eines mit einem Rührer ausgestatteten Vakuumtrockners unter Pulverisierung des Kuchens umfaßt.

2. Verfahren nach Anspruch 1, wobei das Pigmentgranulat einen mittleren Teilchendurchmesser von 1 bis 20 mm aufweist.

3. Verfahren nach Anspruch 1 oder 2, wobei das organische Pigment ein Phthalocyanin-Pigment oder ein Chinacridon-Pigment ist.

4. Verfahren nach einem der vorangehenden Ansprüche, wobei der Filterkuchen einen Wassergehalt von 50 bis 90 Gew.-% aufweist.

5. Verfahren nach einem der vorangehenden Ansprüche, wobei der Filterkuchen durch Filtern einer wässrigen Aufschlämmung des organischen Pigments durch eine Filterpresse erhalten wird.

6. Verfahren zur Herstellung einer Offsetfarbe oder einer Tiefdruckfarbe, welches Verfahren die Präparation eines Pigmentgranulats mittels eines Verfahrens gemäß einem der vorangehenden Ansprüche und die Spülung des derart erhaltenen Pigmentgranulats mit einem öligen Träger umfaßt.

7. Verfahren zur Herstellung einer Pigmentdispersion auf Wasserbasis, welches Verfahren die Präparation eines Pigmentgranulats mittels eines Verfahrens gemäß einem der Ansprüche 1 bis 5 und die Dispergierung des derart erhaltenen Pigments in einem Harzträger auf Wasserbasis umfaßt.

8. Verfahren nach Anspruch 7, wobei die resultierende Dispersion 1 bis 20 Gew.-%, als Netto-Pigmentgehalt, des Pigmentgranulats, 0 bis 30 Gew.-% eines oberflächenaktiven Mittels oder eines Dispersionsmittels und 50 bis 99 Gew.-% eines Harzes auf Wasserbasis enthält, wobei das oberflächenaktive Mittel oder Dispersionsmittel zuvor, während oder nach dem Dehydratisierschritt zugegeben wird.

9. Farbmittel-Zusammensetzung, hergestellt durch Dispergieren des in Anspruch 1 angegebenen Pigmentgranulats in einem Harzträger auf Wasserbasis.

## Revendications

1. Procédé pour la production d'un pigment granulaire ayant une teneur en eau de 30 à 50% en poids, procédé dans lequel on déshydrate un pain mouillé de pigment organique à 20 à 80°C, au moyen d'un séchoir sous vide équipé d'un agitateur, tandis qu'on pulvérise le pain.

2. Procédé selon la revendication 1, dans lequel le pigment granulaire a un diamètre moyen de particule de 1 à 20 mmφ.

3. Procédé selon la revendication 1 ou 2, dans lequel le pigment organique est un pigment phtalocyanine ou un pigment quinacridone.

4. Procédé selon l'une quelconque des revendications précédentes, dans lequel le pain a une teneur en eau de 50 à 90% en poids.

5. Procédé selon l'une quelconque des revendications précédentes, dans lequel le pain est obtenu en filtrant une suspension aqueuse du pigment organique à travers un filtre presse.

6. Procédé pour la production d'une encre offset ou d'une encre d'héliogravure, procédé dans lequel on prépare un pigment granulaire par un procédé selon l'une quelconque des revendications précédentes et on rince le pigment granulaire ainsi obtenu avec un véhicule huileux.

7. Procédé pour la production d'une dispersion de pigment à base d'eau, procédé dans lequel on prépare un pigment granulaire par un procédé selon l'une quelconque des revendications 1 à 5 et on disperse le pigment ainsi obtenu dans un véhicule résineux à base d'eau.

8. Procédé selon la revendication 7, dans lequel la dispersion résultante contient 1 à 20% en poids, en tant que teneur nette en pigment, du pigment granulaire, 0 à 30% en poids d'un tensioactif ou d'un agent dispersant, et 50 à 99% en poids d'une résine à base d'eau, le tensioactif ou l'agent dispersant étant ajouté avant, pendant ou après l'étape de déshydratation.

9. Composition colorante formée par dispersion du pigment granulaire défini dans la revendication 1 dans un véhicule résineux à base d'eau.
